# EUROPEAN PATENT APPLICATION

(11) **EP 2 009 914 A2**
(43) Date of publication of application: **31.12.2008**
(21) Application number: 08154736.6
(22) Date of filing: 17.04.2008
(51) Int. Cl.: H04N 5/50

(54) **Method for tuning to preferred channel and video receiving apparatus using the same**

(30) Priority: 29.06.2007 KR 20070065797
(71) Applicant: Samsung Electronics Co., Ltd., Suwon-si, Gyeonggi-do 442-742 (KR)
(72) Inventor: Choi, Yeon-jung, Uiwang-si (KR)
(74) Representative: Waddington, Richard

(57) **Abstract**

A preferred channel tuning method and a video receiving apparatus using the same are provided. According to the preferred channel tuning method of the video receiving apparatus, a channel through which a broadcast signal containing information identical to information regarding a preferred channel is received is tuned as a preferred channel, based on the information regarding the preferred channel rather than the number of the preferred channel. The information regarding the preferred channel includes program specific information contained in the broadcast signal received through the preferred channel. Accordingly, even when the number of the preferred channel changes due to a change in the channel numbers, a preset preferred channel can be automatically tuned without resetting the preferred channel.

## Description

### BACKGROUND OF THE INVENTION

### 1. Field of the Invention

Apparatuses and methods consistent with the present invention relate to tuning to a preferred channel and receiving video, and more particularly, to automatically tuning to a preferred channel selected using a shortcut key and receiving video.

### 2. Description of the Related Art

Video receiving apparatuses, such as televisions (TVs) or set-top boxes, receive broadcast signals provided from broadcast providers via antennas, and provide users with video corresponding to the received broadcast signals.

Such video receiving apparatuses provide services to set preferred channels using shortcut keys included in remote controllers. Specifically, if a user sets a shortcut key included in a remote controller for a preferred channel, the video receiving apparatus may store information regarding the shortcut key and the number of the preferred channel to which the shortcut key is assigned. Additionally, if a signal corresponding to the shortcut key is input, the video receiving apparatus may provide a broadcast signal received corresponding to the preferred channel to which the shortcut key is assigned.

Channel numbers are occasionally renumbered by broadcast providers. In this situation, the video receiving apparatus reconstructs the channel list comprising the renumbered channel numbers.

However, a conventional video receiving apparatus distinguishes channels according to the channel numbers, and thus if a broadcast provider renumbers the channel numbers and reconstructs a channel list, the conventional video receiving apparatus may tune to the new channels instead of the preferred channel that had been assigned the shortcut key.

For example, if the broadcast provider renumbers channel "11" as channel "13", when channel "11" is set as a preferred channel, the conventional video receiving apparatus may tune to the new channel "11" in response to a signal from the shortcut key.

Therefore, if the channel numbers are renumbered, a user may have to manually search for the renumbered channel number of the preferred channel, and reset the shortcut key for the preferred channel with the detected channel number, which increases user inconvenience.

### SUMMARY OF THE INVENTION

Exemplary embodiments of the present invention address the above disadvantages and other disadvantages not described above. Also, the present invention is not required to overcome the disadvantages described above, and an exemplary embodiment of the present invention may not overcome any of the problems described above.

The present invention provides a preferred channel tuning method and a video receiving apparatus using the same which search for a preferred channel based on information regarding the preferred channel and automatically tune to the detected preferred channel.

The present invention also provides a preferred channel tuning method and a video receiving apparatus using the same which automatically tune to a preset preferred channel even if the channel numbers are renumbered.

The present invention also provides a preferred channel tuning method and a video receiving apparatus using the same which search for a preferred channel to which a shortcut key is assigned only by an input of the shortcut key, based on information regarding the preferred channel, and which automatically tune to the detected preferred channel.

According to the present invention there is provided an apparatus and method as set forth in the appended claims. Other features of the invention will be apparent from the dependent claims, and the description which follows.

According to an aspect of the present invention, there is provided a preferred channel tuning method comprising searching for a channel number corresponding to a preferred channel from a channel list based on pre-stored information regarding the preferred channel; and switching a channel to the channel number of the preferred channel. The channel number which corresponds to the preferred channel may be changed changes with time.

The pre-stored information regarding the preferred channel may comprise program specific information (PSI) contained in a broadcast signal received through the preferred channel.

The pre-stored information regarding the preferred channel may comprise an original network ID, a network ID, a transport stream ID and a service ID.

The searching may comprise searching for a channel number of a channel in the channel list through which a broadcast signal containing information identical to the pre-stored information regarding the preferred channel is received.

If a selection signal corresponding to the preferred channel is received using a shortcut key, the searching may comprise searching for the pre-stored information of the preferred channel. The searching may comprise searching for the channel number of the preferred channel from the channel list based on the pre-stored information regarding the preferred channel.

The pre-stored information regarding the preferred channel may comprise information transmitted in a broadcast signal corresponding to the preferred channel.

According to another aspect of the present invention, there is provided a video receiving apparatus comprising a broadcast receiver configured to tune to a channel; a storage unit which stores information regarding a preferred channel; and a controller which searches for a channel number corresponding to the preferred channel from a channel list based on the stored information regarding the preferred channel, and controls the broadcast receiver to tune a channel of the channel number corresponding to the preferred channel. The channel number of the preferred channel may change with time.

The stored information regarding the preferred channel may comprise program specific information (PSI) contained in a broadcast signal received through the preferred channel.

The stored information regarding the preferred channel may comprise at least one of an original network ID, a network ID, a transport stream ID and a service ID.

The controller may search for a channel number of a channel in the channel list through which a broadcast signal containing information identical to the stored information regarding the preferred channel is received.

The video receiving apparatus may further comprise a key input unit comprising a shortcut key to select the preferred channel. If a selection signal corresponding to the preferred channel is received using the shortcut key of the key input unit, the controller may search for the stored information regarding the preferred channel. The controller may then search for the channel number corresponding to the preferred channel from the channel list based on the stored information regarding the preferred channel.

The stored information regarding the preferred channel may comprise information transmitted in a broadcast signal corresponding to the preferred channel.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 is a block diagram of a video receiving apparatus according to an exemplary embodiment of the present invention; and

FIG. 2 is a flowchart explaining a method for tuning a preferred channel in a video receiving apparatus according to an exemplary embodiment of the present invention.

### DETAILED DESCRIPTION OF EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

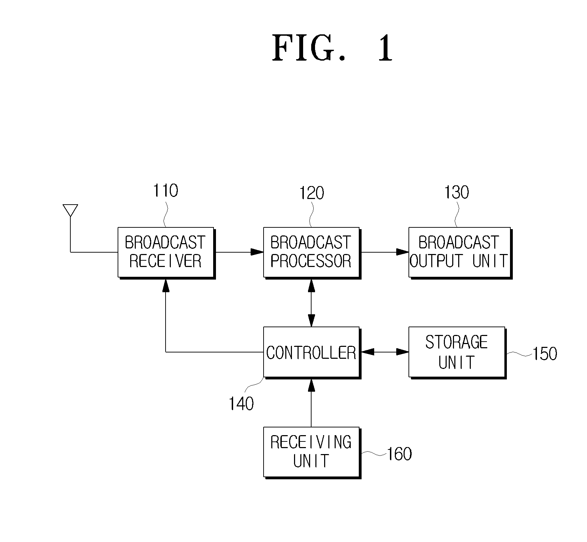

FIG. 1 is a block diagram of a video receiving apparatus according to an exemplary embodiment of the present invention.

The video receiving apparatus according to an exemplary embodiment of the present invention tunes to a channel, through which a broadcast signal containing information identical to information regarding a preferred channel is received, as a preferred channel, based on the information regarding the preferred channel rather than the number of the preferred channel. The video receiving apparatus may tune to the same preferred channel without needing the new number to be assigned to the preferred channel, even if the channel numbers are renumbered.

Referring to FIG. 1, the video receiving apparatus comprises a broadcast receiver 110, a broadcast processor 120, a broadcast output unit 130, a controller 140, a storage unit 150 and a receiving unit 160.

The broadcast receiver 110 tunes to a channel selected by a user via an antenna, and receives a broadcast signal through the tuned channel.

The broadcast processor 120 divides the broadcast signal received via the broadcast receiver 110 into program specific information (PSI), a video signal and an audio signal. The broadcast processor 120 performs predetermined signal processing to the divided video and audio signals, and outputs video and sound corresponding to the video and audio signals, respectively, through the broadcast output unit 130.

The controller 140 stores information regarding preferred channels in the storage unit 150. In more detail, the controller 140 receives a broadcast signal received through a channel set as a preferred channel, and controls the broadcast receiver 110 and broadcast processor 120 so that the received broadcast signal is divided. The controller 140 then stores in the storage unit 150 the PSI separated from the broadcast signal.

In this situation, the PSI stored as information regarding the preferred channel comprises an original network ID, a network ID, a transport stream ID and a service ID.

If the channel numbers are renumbered, the controller 140 may generate a channel list comprising the renumbered channel numbers and may store the generated list in the storage unit 150. The channel list comprises the renumbered channel numbers and information regarding broadcast signals received through channels corresponding to the renumbered channel numbers, namely, the PSI.

A broadcast provider may renumber the channel numbers over the course of time, and accordingly the numbers of preferred channels may be renumbered over time.

The storage unit 150 stores information regarding the preferred channel to which a shortcut key is assigned, and regarding the channel list. More particularly, the storage unit 150 may store information related to the broadcast signal of the preferred channel in association with the preferred channel. The receiving unit 160 receives a key input signal from a shortcut key in a remote controller, and sends the received key input signal to the controller 140.

If the key input signal corresponding to the shortcut key is received from the receiving unit 160, the controller 140 may search for a channel number of the preferred channel from the channel list, based on the information regarding the preferred channel assigned the shortcut key which has been stored in the storage unit 150. Therefore, even if the channel numbers have been changed, the channel number corresponding to the preferred channel may be found using the information related to the broadcast signal of the preferred channel, which is stored in the channel list.

The controller 140 controls the broadcast receiver 110 to tune to the detected channel number.

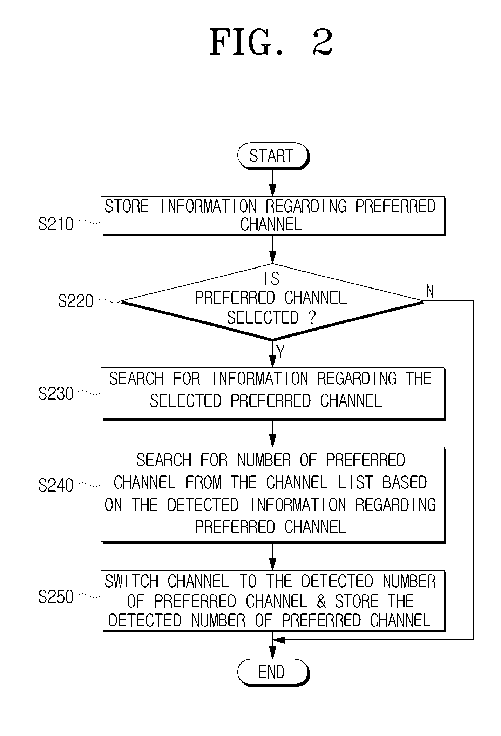

FIG. 2 is a flowchart explaining a method for tuning a preferred channel in a video receiving apparatus according to an exemplary embodiment of the present invention.

In FIG. 2, if a preferred channel is assigned a shortcut key, the controller 140 may store information regarding the assigned preferred channel in the storage unit 150 in operation S210. A user generally sets a channel as a preferred channel while viewing broadcasting, so the controller 140 may store PSI, which is separated from a broadcast signal received through the channel as a preferred channel, in the storage unit 150 as information regarding the preferred channel.

The controller 140 determines whether the preferred channel is selected in operation S220. If a key input signal corresponding to the shortcut key is received from the receiving unit 160, the controller 140 may determine that the preferred channel is selected.

If it is determined that the preferred channel is selected, the controller 140 may search for information regarding the selected preferred channel from the storage unit 150 in operation S230. The information regarding the selected preferred channel may be the PSI.

The controller 140 also searches for a number of the preferred channel from the channel list, based on the detected information regarding the preferred channel in operation S240. Specifically, the controller 140 compares information regarding a broadcast signal received through channels of the channel list to the detected information regarding the preferred channel, and then searches for a number of a channel through which the broadcast signal comprising information identical to the information regarding the preferred channel is received.

For example, if an original network ID contained in a broadcast signal received through a channel with number "11" set as a preferred channel is "aaa", and if an original network ID of a channel with number "13" contained in the channel list is "aaa", the preferred channel may have number "13".

In other words, the channel through which the broadcast signal comprising information identical to the information regarding the preferred channel is received may be a preferred channel, and the number of the channel may be the number of the preferred channel.

The controller 140 controls the broadcast receiver 110 to switch the channel to the detected number of the preferred channel, and stores the detected number of the preferred channel in the storage unit 150 in operation S250.

As described above, according to the exemplary embodiment of the present invention, even if the broadcast provider renumbers channel "11" as channel "13" when channel "11" is set as a preferred channel and is assigned the shortcut key, the video receiving apparatus may search for the number of the preferred channel based on the PSI contained in the broadcast signal received through the preferred channel rather than the number of the preferred channel. Accordingly, the video receiving apparatus may automatically detect that the number the preferred channel has been renumbered as number "13", and so it is possible to switch a current channel to channel "13".

That is, even if the channel numbers are renumbered, it is possible to tune to a preferred channel identical to the preferred channel to which the shortcut key has been assigned only by an input of the shortcut key without the need to check whether the preferred channel has been renumbered every a user selects the preferred channel.

Although the searches for the number of the preferred channel from the channel list when the preferred channel is selected in accordance with the exemplary embodiment of the present invention, the number of the preferred channel may also be sought from the channel list based on the pre-stored information regarding the preferred channel when the channel is switched, so that the preferred channel may be renumbered to match the number of the preferred channel.

According to the exemplary embodiment of the present invention as described above, even when channel numbers are renumbered and thus the number of a preferred channel is also renumbered, it is possible to automatically tune to a preset preferred channel without resetting the preferred channel.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A preferred channel tuning method comprising:
searching for a channel number corresponding to a preferred channel from a channel list based on pre-stored information regarding the preferred channel; and
switching a channel to the channel number corresponding to the preferred channel found as a result of the searching,
wherein the channel number which corresponds to the preferred channel changes with time.

2. The preferred channel tuning method as claimed in claim 1, wherein the pre-stored information regarding the preferred channel comprises program specific information, PSI, contained in a broadcast signal received through the preferred channel.

3. The preferred channel tuning method as claimed in claim 1 or claim 2, wherein the pre-stored information regarding the preferred channel comprises at least one of an original network ID, a network ID, a transport stream ID and a service ID.

4. The preferred channel tuning method as claimed in any preceding claim, wherein the searching comprises searching for a channel number of a channel in the channel list through which a broadcast signal containing information identical to the pre-stored information regarding the preferred channel is received.

5. The preferred channel tuning method as claimed in any preceding claim, wherein the searching comprises searching for the pre-stored information of the preferred channel if a selection signal corresponding to the preferred channel is received using a shortcut key, and
searching for the channel number of the preferred channel from the channel list based on the pre-stored information regarding the preferred channel.

6. The preferred channel tuning method as claimed in any preceding claim, wherein the pre-stored information regarding the preferred channel comprises information transmitted in a broadcast signal corresponding to the preferred channel.

7. A video receiving apparatus comprising:
a broadcast receiver (110) configured to tune a channel;
a storage unit (150) which stores information regarding a preferred channel; and
a controller (140) which searches for a channel number corresponding to the preferred channel from a channel list based on the stored information regarding the preferred channel, and controls the broadcast receiver (110) to tune a channel corresponding to the channel number corresponding to the preferred channel,
wherein the channel number of the preferred channel changes with time.

8. The video receiving apparatus as claimed in claim 7, wherein the stored information regarding the preferred channel comprises program specific information, PSI, contained in a broadcast signal received through the preferred channel.

9. The video receiving apparatus as claimed in claim 7 or claim 8, wherein the stored information regarding the preferred channel comprises at least one of an original network ID, a network ID, a transport stream ID and service ID.

10. The video receiving apparatus as claimed in any one of claims 7 to 9, wherein the controller (140) searches for a channel number of a channel in the channel list through which a broadcast signal containing information identical to the stored information regarding the preferred channel is received.

11. The video receiving apparatus as claimed in any one of claims 7 to 10, further comprising a key input unit comprising a shortcut key to select the preferred channel,
wherein the controller (140) searches for the stored information regarding the preferred channel if a selection signal corresponding to the preferred channel is received using the shortcut key of the key input unit, and then searches for the channel number corresponding to the preferred channel from the channel list based on the stored information regarding the preferred channel.

12. The video receiving apparatus as claimed in any one of claims 7 to 11, wherein the stored information regarding the preferred channel comprises information transmitted in a broadcast signal corresponding to the preferred channel.
